# EUROPÄISCHE PATENTSCHRIFT

(11) **EP 3 209 464 B1**
(45) Veröffentlichungstag und Bekanntmachung des Hinweises auf die Patenterteilung: **27.05.2020**
(21) Anmeldenummer: 15770849.6
(22) Anmeldetag: 23.09.2015
(51) Int. Cl.: B25F 3/00, B23Q 11/00, B23D 59/00

(54) **HANDWERKZEUGMASCHINE MIT EINER SDS-WERKZEUGAUFNAHME**
PORTABLE MACHINE TOOL COMPRISING AN SDS TOOL HOLDER
MACHINE-OUTIL PORTATIVE POURVUE D'UN PORTE-OUTIL SDS

(30) Priorität: 20.10.2014 DE 102014221213
(43) Veröffentlichungstag der Anmeldung: 30.08.2017
(73) Patentinhaber: Robert Bosch GmbH, 70442 Stuttgart (DE)
(72) Erfinder: ENGELFRIED, Uwe, 73760 Ostfildern (DE); DUERR, Thomas, 71679 Asperg (DE)
(86) Internationale Anmeldenummer: PCT/EP2015/071867
(87) Internationale Veröffentlichungsnummer: WO 2016/062492

(56) Entgegenhaltungen:
- EP-A1- 1 491 290
- DE-A1- 2 918 629
- DE-A1- 4 340 727
- DE-A1-102005 062 402
- DE-U1- 29 806 181
- GB-A- 2 260 936

## Beschreibung

### Stand der Technik

Die vorliegende Erfindung betrifft eine Handwerkzeugmaschine mit einem Werkzeuggehäuse, in dem mindestens eine Antriebseinheit zum Antrieb eines zur Werkstückbearbeitung vorgesehenen, austauschbaren Einsatzwerkzeugs ausgebildet ist, wobei eine SDS-Werkzeugaufnahme zur Aufnahme des austauschbaren Einsatzwerkzeugs vorgesehen ist.

Aus dem Stand der Technik ist eine derartige, z.B. nach Art einer Stichsäge ausgebildete Handwerkzeugmaschine mit einer SDS-Werkzeugaufnahme zur Aufnahme eines austauschbaren Einsatzwerkzeugs bekannt, der eine externe Staubabsaugung zugeordnet ist. Diese dient dazu, im Betrieb der Stichsäge bei einer Werkstückbearbeitung anfallenden Staub abzutransportieren. Hierzu weist die externe Staubabsaugung eine im Bereich des Einsatzwerkzeugs am Werkzeuggehäuse angeordnete Staubfangeinrichtung auf. Ein Beispiel wird in der DE2918629A1 dargestellt.

Nachteilig an diesem Stand der Technik ist, dass die externe Staubabsaugung bzw. deren Staubfangeinrichtung durch deren Anordnung am Werkzeuggehäuse die Abmessungen der Stichsäge bzw. der Handwerkzeugmaschine vergrößert und somit deren Handhabung insgesamt verschlechtert. Darüber hinaus ist zumindest die Staubfangeinrichtung im Bereich des Einsatzwerkzeugs angeordnet, wodurch ein zu bearbeitendes Werkstück zumindest teilweise verdeckt wird.

### Offenbarung der Erfindung

Eine Aufgabe der Erfindung ist es daher, eine neue Handwerkzeugmaschine mit einer SDS-Werkzeugaufnahme bereitzustellen, die mit einer Staubabsaugung versehen ist, die zumindest im Bereich der SDS-Werkzeugaufnahme reduzierte Abmessungen aufweist.

Dieses Problem wird gelöst durch eine Handwerkzeugmaschine mit einem Werkzeuggehäuse, in dem mindestens eine Antriebseinheit zum Antrieb eines zur Werkstückbearbeitung vorgesehenen, austauschbaren Einsatzwerkzeugs ausgebildet ist, wobei eine SDS-Werkzeugaufnahme zur Aufnahme des austauschbaren Einsatzwerkzeugs vorgesehen ist. Die SDS-Werkzeugaufnahme weist mindestens einen Absaugkanal zum Abtransport von bei der Werkstückbearbeitung anfallendem Staub auf.

Die Erfindung ermöglicht somit die Bereitstellung einer Handwerkzeugmaschine mit einer SDS-Werkzeugaufnahme und einer Staubabsaugung, bei der durch eine Integration eines Absaugkanals der Staubabsaugung in die SDS-Werkzeugaufnahme eine Reduzierung der Abmessungen der Staubabsaugung ermöglicht werden kann. Darüber hinaus kann durch diese Integration im Betrieb der Handwerkzeugmaschine eine Abdeckung eines jeweiligen Werkstücks durch die Staubabsaugung verhindert werden.

Bevorzugt weist die SDS-Werkzeugaufnahme ein Aufnahmegehäuse auf, wobei der mindestens eine Absaugkanal in das Aufnahmegehäuse eingeformt ist.

Somit kann auf einfache Art und Weise die Bereitstellung eines in die SDS-Werkzeugaufnahme integrierten Absaugkanals ermöglicht werden.

Die SDS-Werkzeugaufnahme weist vorzugsweise einen mit einem Verschlusselement verschließbaren Grundkörper auf, der mit dem Werkzeuggehäuse verbunden ist, an das Werkzeuggehäuse angeformt ist oder einstückig mit dem Werkzeuggehäuse ausgebildet ist.

Somit kann die SDS-Werkzeugaufnahme als solche sicher und unkompliziert vor einer Verschmutzung, z.B. durch Sägespäne oder Schleifstaub, die bei der Bearbeitung eines Werkstücks anfallen können, geschützt werden.

Vorzugsweise ist in dem Grundkörper eine Spannvorrichtung zum Einspannen des Einsatzwerkzeugs angeordnet.

Somit kann auch eine zumindest weitgehend verschmutzungsfreie Anordnung der Spannvorrichtung im Grundkörper ermöglicht werden.

Der mindestens eine Absaugkanal ist bevorzugt zumindest bereichsweise im Grundkörper und/oder im Verschlusselement ausgebildet.

Somit kann der mindestens eine Absaugkanal einfach und kostengünstig als integraler Bestandteil in der SDS-Werkzeugaufnahme ausgebildet werden.

Gemäß einer Ausführungsform weist der Grundkörper mindestens einen ersten rinnenförmigen Kanal auf und das Verschlusselement ist mit mindestens einem zweiten rinnenförmigen Kanal versehen, wobei der erste rinnenförmige Kanal und der zweite rinnenförmige Kanal dazu ausgebildet sind, bei einem Verschließen des Grundkörpers mit dem Verschlusselement den mindestens einen Absaugkanal auszubilden.

Somit kann ein zweiteiliger Absaugkanal bereitgestellt werden, der auf einfache Art und Weise durch ein Öffnen des Verschlusselements in seiner Längserstreckung geöffnet und somit schnell und unkompliziert gereinigt werden kann.

Das Verschlusselement weist bevorzugt ein Verriegelungselement zur Verriegelung an dem Grundkörper auf.

Somit kann das Verschlusselement sicher und zuverlässig am Grundkörper unter Ausbildung des mindestens einen Absaugkanals verriegelt werden.

Vorzugsweise ist das Verriegelungselement zur Verrastung am Grundkörper ausgebildet und weist zumindest ein Rastelement auf.

Somit kann ein einfaches und kostengünstiges Verriegelungselement bereitgestellt werden.

Bevorzugt ist das Verriegelungselement zur Verschraubung am Grundkörper ausgebildet, wobei am Grundkörper zumindest ein Schraubgewinde vorgesehen ist.

Somit kann ein sicheres und zuverlässiges Verriegelungselement bereitgestellt werden.

Das Verschlusselement ist bevorzugt schwenkbar am Grundkörper angeordnet.

Somit kann auf einfache Art und Weise eine Sicherung des Verschlusselements am Grundkörper erreicht werden.

Vorzugsweise ist der mindestens eine Absaugkanal rohrförmig ausgebildet.

Somit kann ein betriebssicherer und leistungsstarker Absaugkanal bereitgestellt werden.

Der mindestens eine Absaugkanal ist bevorzugt mit einem Absaugstutzen zur Verbindung mit einer externen Absaugung verbunden.

Somit kann der anfallende Staub sicher und unkompliziert von der externen Absaugung abgesaugt bzw. abtransportiert werden.

Gemäß einer Ausführungsform ist das austauschbare Einsatzwerkzeug nach Art eines zum Umlauf um eine zugeordnete Führungseinheit ausgebildeten Schneidstrangs ausgebildet.

Somit kann auf einfache Art und Weise ein geeignetes Einsatzwerkzeug bereitgestellt werden.

Vorzugsweise ist die Handwerkzeugmaschine nach Art einer Kettensäge ausgebildet.

Somit kann die erfindungsgemäße Staubabsaugung bei einer Vielzahl unterschiedlicher Handwerkzeugmaschinen, wie z.B. einer Kettensäge, Anwendung finden.

Das Eingangs genannte Problem wird auch gelöst durch eine SDS-Werkzeugaufnahme zur Aufnahme eines zur Werkstückbearbeitung vorgesehenen, austauschbaren Einsatzwerkzeugs. Diese weist mindestens einen Absaugkanal zum Abtransport von bei der Werkstückbearbeitung anfallendem Staub auf.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine perspektivische Ansicht einer nach Art einer Kettensäge ausgebildeten Handwerkzeugmaschine mit einer SDS-Werkzeugaufnahme gemäß einer ersten Ausführungsform,
Fig. 2 eine perspektivische Ansicht eines Ausschnitts einer Unterseite der Handwerkzeugmaschine mit der SDS-Werkzeugaufnahme von Fig. 1,
Fig. 3 eine perspektivische Seitenansicht der SDS-Werkzeugaufnahme von Fig. 1 und Fig. 2 im geöffneten Zustand,
Fig. 4 eine perspektivische Seitenansicht eines Ausschnitts der Handwerkzeugmaschine von Fig. 1 mit einer SDS-Werkzeugaufnahme gemäß einer zweiten Ausführungsform, und
Fig. 5 eine perspektivische Ansicht eines Ausschnitts einer Unterseite der Handwerkzeugmaschine von Fig. 1 mit der SDS-Werkzeugaufnahme von Fig. 4.

### Beschreibung der Ausführungsbeispiele

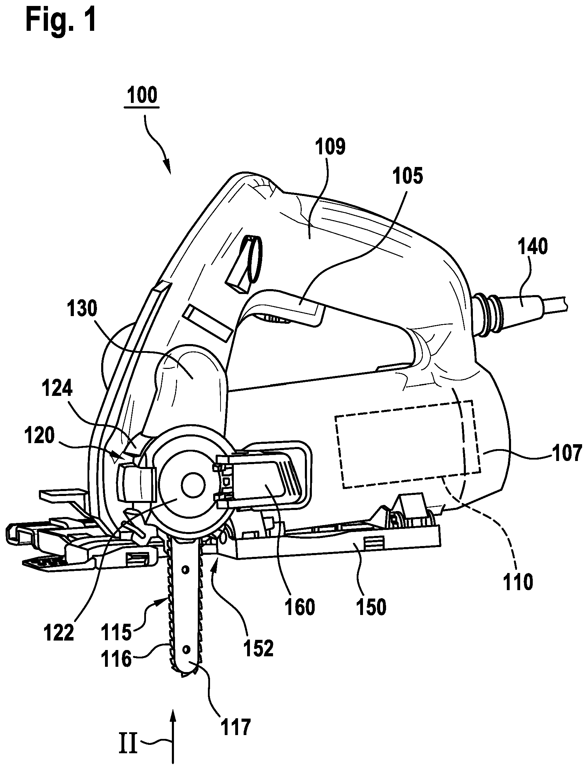

Fig. 1 zeigt eine Handwerkzeugmaschine 100 mit einem Werkzeuggehäuse 107, das beispielhaft mit einem henkelartigen Handgriff 109 versehen ist. In dem Werkzeuggehäuse 107 ist vorzugsweise mindestens eine Antriebseinheit 110 zum Antrieb eines zur Werkstückbearbeitung vorgesehenen, austauschbaren Einsatzwerkzeugs 115 angeordnet. Die Antriebseinheit 110 ist z.B. über einen Handschalter 105, bzw. einen Handtaster, von einem Benutzer betätigbar, d.h. zumindest ein- und ausschaltbar, ist vorzugsweise als Antriebsmotor ausgebildet und wird deshalb nachfolgend auch als "Antriebsmotor 110" bezeichnet. Dieser Antriebsmotor 110 kann ein beliebiger Motortyp sein, z.B. ein elektronisch kommutierter Motor oder ein Gleichstrommotor. Vorzugsweise ist der Antriebsmotor 110 über eine elektronische Steuereinheit derart elektronisch steuer- bzw. regelbar, dass z.B. Vorgaben hinsichtlich einer gewünschten Drehzahl des Antriebsmotors 110 realisierbar sind. Die Funktionsweise und der Aufbau eines derartigen Antriebsmotors 110 sowie der elektronischen Steuereinheit sind aus dem Stand der Technik hinreichend bekannt, sodass hier zwecks Knappheit der Beschreibung auf eine eingehende Beschreibung verzichtet wird.

Gemäß einer Ausführungsform ist zur Aufnahme des austauschbaren Einsatzwerkzeugs 115 eine Werkzeugaufnahme 120 vorgesehen, die erfindungsgemäß nach Art einer SDS-Werkzeugaufnahme ausgebildet ist. Mit dem Begriff "SDS-Werkzeugaufnahme" wird im Kontext der vorliegenden Erfindung generell eine Schnell-Spann-Werkzeugaufnahme bezeichnet, in der austauschbare Mini-Werkzeuge werkzeuglos eingespannt werden können. Eine derartige Schnell-Spann-Werkzeugaufnahme ist bevorzugt wie die z.B. aus der DE 10 2012 211 094 A1 bekannte Schnell-Spann-Werkzeugaufnahme aufgebaut, deren Offenbarung explizit in die vorliegende Beschreibung als integraler Bestandteil hiervon aufgenommen wird, sodass hier zwecks Knappheit und Einfachheit der Beschreibung auf eine eingehende Beschreibung des Aufbaus und der Funktionalität der SDS-Werkzeugaufnahme 120 verzichtet werden kann.

Es wird jedoch darauf hingewiesen, dass die vorliegende Erfindung nicht auf eine gemäß der DE 10 2012 211 094 A1 aufgebaute SDS-Werkzeugaufnahme beschränkt ist, sondern ganz allgemein bei allen SDS-Werkzeugaufnahmen zur Aufnahme von austauschbaren SDS-Mini-Werkzeugen Anwendung finden kann, unabhängig davon, ob es sich hierbei um eine SDS-max-, SDS-quick-, SDS-plus- oder SDS-top-Werkzeugaufnahme handelt. Darüber hinaus wird darauf hingewiesen, dass die vorliegende Erfindung auch bei Schnell-Spann-Werkzeugaufnahmen Anwendung finden kann, die lediglich ähnlich zu gebräuchlichen SDS-Werkzeugaufnahmen aufgebaut sind bzw. eine ähnliche Funktionalität aufweisen, jedoch nicht mit der Bezeichnung "SDS" gekennzeichnet sind, da diese, wie dem Fachmann zweifelsfrei bekannt ist, eine von der Robert Bosch GmbH geprägte Bezeichnung für Schnell-Spann-Werkzeugaufnahmen bzw. - Mini-Werkzeuge ist.

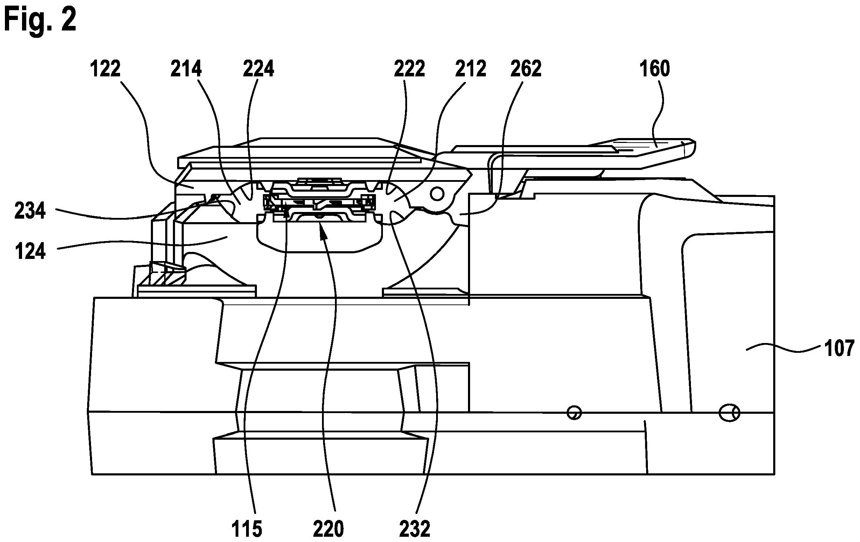

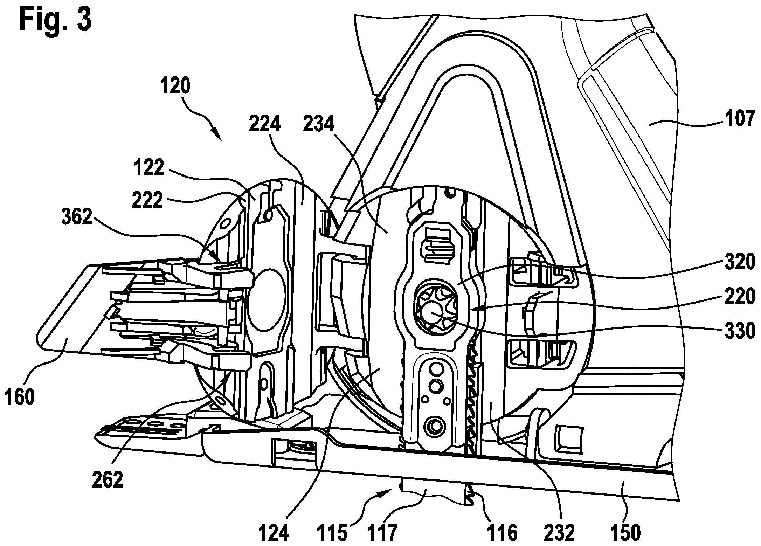

Bevorzugt weist die SDS-Werkzeugaufnahme 120 ein Aufnahmegehäuse 122, 124 mit einem Verschlusselement 122 und einem Grundkörper 124 auf, wobei das Verschlusselement 122 dazu ausgebildet ist, den Grundkörper 124 zumindest im Betrieb der Handwerkzeugmaschine 100 zu verschließen. Der Grundkörper 124 ist vorzugsweise mit dem Werkzeuggehäuse 107 verbunden, an das Werkzeuggehäuse 107 angeformt oder einstückig mit dem Werkzeuggehäuse 107 ausgebildet. Des Weiteren weist das Verschlusselement 122 zur Verriegelung an dem Grundkörper 124 bevorzugt ein Verriegelungselement 160 auf, das unten bei Fig. 2 weiter beschrieben wird, und ist vorzugsweise schwenkbar am Grundkörper 124 angeordnet, wie in Fig. 3 verdeutlicht.

Bevorzugt ist die Handwerkzeugmaschine 100 nach Art einer Kettensäge ausgebildet, wie diese auch in der DE 10 2012 211 094 A1 gezeigt und beschrieben ist, bei der das austauschbare Einsatzwerkzeug 115 nach Art eines zum Umlauf um eine zugeordnete Führungseinheit 117 ausgebildeten Schneidstrangs 116 ausgebildet ist. Deshalb wird die Handwerkzeugmaschine 100 zwecks Einfachheit und Klarheit der Beschreibung nachfolgend auch als die "Kettensäge 100" bezeichnet. Vorzugsweise ist der Schneidstrang 116 der Kettensäge 100 als Schneidkette ausgebildet.

Des Weiteren ist der Kettensäge 100 eine Fußplatte 150 zugeordnet, mit der diese auf ein zugeordnetes, zu bearbeitendes Werkstück aufgelegt bzw. darauf geführt werden kann. Die Fußplatte 150 weist im Bereich des beispielhaft senkrecht zum Werkzeuggehäuse 107 angeordneten Einsatzwerkzeugs 115 eine Aussparung 152 auf, durch die das Einsatzwerkzeug 115 durchgreift.

Gemäß einer Ausführungsform ist am Werkzeuggehäuse 107 im Bereich der SDS-Werkzeugaufnahme 120 ein Absaugstutzen 130 angeordnet, über den bei einer Werkstückbearbeitung anfallender Staub abtransportiert werden kann. Bevorzugt ist der Absaugstutzen 130 abgewinkelt und mit einer externen Staubabsaugung verbindbar.

Des Weiteren ist die Kettensäge 100 zur netzabhängigen Stromversorgung mit einer flexiblen elektrischen Anschlussleitung 140 ausgestattet. Es wird jedoch darauf hingewiesen, dass die vorliegende Erfindung nicht auf netzabhängig betreibbare Kettensägen beschränkt ist, sondern vielmehr bei einer Vielzahl von Handwerkzeugmaschinen Anwendung finden kann, die mit einer SDS-Werkzeugaufnahme im Sinne der vorliegenden Erfindung versehen sind, unabhängig davon, ob diese Handwerkzeugmaschinen netzabhängig oder Akkubetrieben ausgeführt sind.

Fig. 2 zeigt einen Ausschnitt der Kettensäge 100 von Fig. 1, gesehen in Richtung eines Pfeils II von Fig. 1 bzw. illustrativ in Richtung von deren Unterseite betrachtet, und verdeutlicht die SDS-Werkzeugaufnahme 120 mit dem Aufnahmegehäuse 122, 124 von Fig. 1, das den Grundkörper 124 und das Verschlusselement 122 aufweist. Gemäß einer Ausführungsform weist die SDS-Werkzeugaufnahme 120 mindestens einen Absaugkanal 212 auf, illustrativ einen ersten und einen zweiten Absaugkanal 212, 214, die jeweils zum Abtransport von bei einer Werkstückbearbeitung anfallendem Staub ausgebildet sind. Bevorzugt sind die Absaugkanäle 212, 214 hierzu über den Absaugstutzen 130 von Fig. 1 mit einer externen Absaugvorrichtung verbindbar.

Illustrativ sind die Absaugkanäle 212, 214 rohrförmig ausgebildet, bevorzugt mit kreisförmigem Querschnitt. Es wird jedoch darauf hingewiesen, dass die vorliegende Erfindung nicht auf rohrförmige Absaugkanäle mit kreisförmigem Querschnitt beschränkt ist, sondern bei beliebigen Querschnittsformen Anwendung finden kann, z.B. bei eckigen Formen usw.

Gemäß einer Ausführungsform sind die Absaugkanäle 212, 214 in das Aufnahmegehäuse 122, 124 eingeformt und hierbei bevorzugt zumindest bereichsweise in dessen Grundkörper 124 und/oder in dessen Verschlusselement 122 ausgebildet. Vorzugsweise weist der Grundkörper 124 mindestens einen ersten und illustrativ zwei erste rinnenförmige Kanäle 232, 234 auf und das Verschlusselement 122 ist mit mindestens einem zweiten und illustrativ zwei zweiten rinnenförmigen Kanälen 222, 224 versehen.

Diese ersten und zweiten rinnenförmigen Kanäle 232, 234, 222, 224 sind bevorzugt dazu ausgebildet, bei verschlossenem Aufnahmegehäuse 122, 124 die beiden Absaugkanäle 212, 214 auszubilden. Hierzu weisen die ersten und zweiten rinnenförmigen Kanäle 232, 234, 222, 224 bevorzugt jeweils einen halbkreisförmigen Querschnitt auf und sind derart im Grundkörper 124 bzw. im Verschlusselement 122 ausgebildet, dass die ersten rinnenförmigen Kanäle 232, 234 sich bei einem Verschließen des Grundkörpers 124 mittels des Verschlusselements 122 mit den zweiten rinnenförmigen Kanälen 222, 224 überdecken und mit diesen jeweils rohrförmige Strukturen ausbilden.

Gemäß einer Ausführungsform ist im Grundkörper 124 eine Spannvorrichtung 220 angeordnet, die dazu ausgebildet ist, das Einsatzwerkzeug 115 von Fig. 1 bzw. die Führungseinheit 117 mit dem Schneidstrang 116 zumindest abschnittsweise in der SDS-Werkzeugaufnahme 120 einzuspannen. Eine betriebssichere Verriegelung der Spannvorrichtung 220 erfolgt hierbei durch das Verschließen des Grundkörpers 124 mittels des Verschlusselements 122. Um ein unbeabsichtigtes Öffnen dieses Verschlusselements 122 im Betrieb der Kettensäge 100 von Fig. 1 zu verhindern, ist das Verschlusselement 122 über das Verriegelungselement 160 am Grundkörper 124 verriegelbar, bevorzugt verrastbar. Hierzu weist das Verriegelungselement 160 vorzugsweise zumindest ein Rastelement 262 auf, das z.B. nach einer am Grundkörper 124 verrastbaren Rastnase ausgebildet ist.

Fig. 3 zeigt die SDS-Werkzeugaufnahme 120 von Fig. 1 und Fig. 2 zur Verdeutlichung der im Grundkörper 124 und im Verschlusselement 122 ausgebildeten, rinnenförmigen Kanäle 222, 224, 232, 234 von Fig. 2. Diese rinnenförmigen Kanäle 222, 224, 232, 234, und somit die Absaugkanäle 212, 214 von Fig. 1 und Fig. 2, sind bevorzugt beidseits des Einsatzwerkzeugs 115 von Fig. 1 und Fig. 2 angeordnet. Illustrativ sind die rinnenförmigen Kanäle 222, 232 in Längsrichtung der Kettensäge 100 von Fig. 1 rechts vom Einsatzwerkzeug 115, bzw. im Bereich zwischen Einsatzwerkzeug 115 und Anschlussleitung 140 von Fig. 1, angeordnet und die rinnenförmigen Kanäle 224, 234 sind in Längsrichtung der Kettensäge 100 illustrativ auf der anderen Seite des Einsatzwerkzeugs 115 - in Fig. 3 links - angeordnet. Damit können z.B. bei der Werkstückbearbeitung anfallende Sägespäne oder Staub direkt vom Schneidstrang 116 abtransportiert bzw. abgesagt werden.

Es wird jedoch darauf hingewiesen, dass die oben beschriebene Anordnung der rinnenförmigen Kanäle 232, 234, 222, 224 in Längsrichtung der Kettensäge 100 von Fig. 1 lediglich beispielhaften Charakter hat und nicht als Einschränkung der Erfindung zu verstehen ist. Vielmehr können diese auch in Querrichtung oder auf beliebige andere Art und Weise angeordnet werden, wobei auch eine andere Anzahl von rinnenförmigen Kanälen implementiert werden kann.

Des Weiteren verdeutlicht Fig. 3 die schwenkbare Verbindung zwischen dem Verriegelungselement 160 und dem Grundkörper 124 und verdeutlicht das bevorzugt zur Verrastung am Grundkörper 124 ausgebildete Verriegelungselement 160. Dieses ist zumindest mit dem Rastelement 262 von Fig. 2 und bevorzugt mit mindestens einem weiteren Rastelement 362 versehen, das vorzugsweise ähnlich wie das Rastelement 362 ausgebildet ist.

Es wird darauf hingewiesen, dass die Rastelemente 262, 362 lediglich beispielhaft am Verriegelungselement 160 angeordnet sind und alternativ auch am Grundkörper 124 und/oder am Werkzeuggehäuse 107 angeordnet sein können. Darüber hinaus können auch funktional ähnliche Rastelemente bzw. alternative Verriegelungselemente Anwendung finden, z.B. Pressstifte.

Darüber hinaus zeigt Fig. 3 die Spannvorrichtung 220 des Einsatzwerkzeugs 115 von Fig. 2 mit einem Schneidstranghalteelement 320, das illustrativ auf der Führungseinheit 117 des Schneidstrangs 116 angeordnet ist. Bevorzugt ist das Schneidstranghalteelement 320 zumindest dazu ausgebildet, die Führungseinheit 117 mit dem Schneidstrang 116 in der SDS-Werkzeugaufnahme 120 bzw. an einem Antriebselement 330 betriebssicher zu fixieren. Das Antriebselement 330 ist mit dem Antriebsmotor 110 verbunden und dazu ausgebildet, den Schneidstrang 116 anzutreiben.

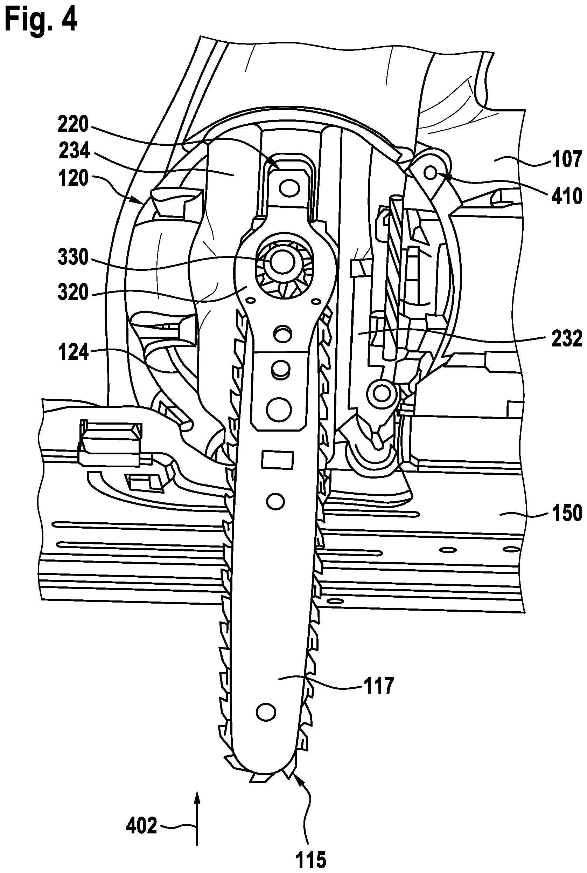

Fig. 4 zeigt die SDS-Werkzeugaufnahme 120 von Fig. 1 bis Fig. 3 mit dem gemäß einer zweiten Ausführungsform ausgebildeten Grundkörper 124, in dem jedoch ebenfalls wie bei Fig. 2 und Fig. 3 beschrieben beidseits vom Einsatzwerkzeug 115 die rinnenförmigen Kanäle 232, 234 angeordnet sind. Im Gegensatz zu der bei Fig. 1 dargestellten, ersten Ausführungsform ist der Grundkörper 124 gemäß der zweiten Ausführungsform jedoch dazu ausgebildet, ein Verschrauben mit dem Verschlusselement 122 von Fig. 1 bis Fig. 3 zu ermöglichen. Hierzu ist am Grundkörper 124 gemäß der zweiten Ausführungsform bevorzugt zumindest ein Schraubgewinde 410 vorgesehen.

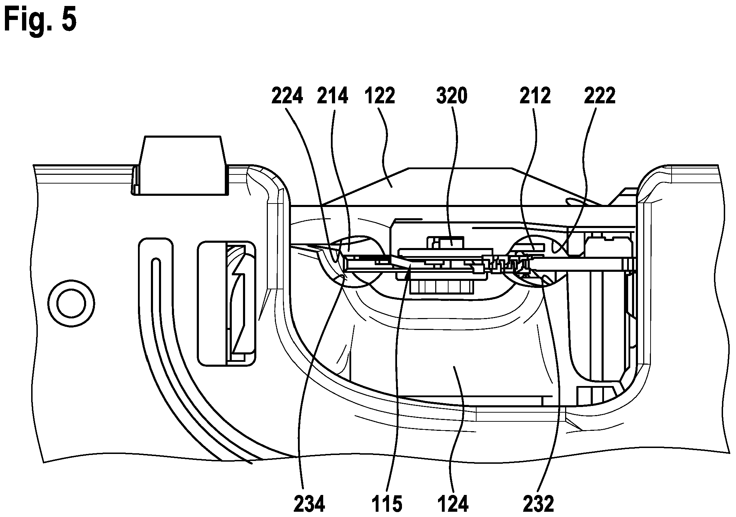

Fig. 5 zeigt die SDS-Werkzeugaufnahme 120 von Fig. 4, gesehen in Richtung eines Pfeils 402 von Fig. 4 bzw. illustrativ in Richtung von deren Unterseite betrachtet. Analog zu Fig. 2 bilden die rinnenförmigen Kanäle 222, 224, 232, 234 einen ersten und zweiten Absaugkanal 212, 214 aus, die bevorzugt beidseits des Einsatzwerkzeugs 115 von Fig. 4 angeordnet sind. Hierbei ist der erste Absaugkanal 212 illustrativ rechts vom Einsatzwerkzeug 115 angeordnet und der zweite Absaugkanal 214 ist illustrativ links vom Einsatzwerkzeug 115 angeordnet.

## Patentansprüche

1. Handwerkzeugmaschine (100) mit einem Werkzeuggehäuse (107), in dem mindestens eine Antriebseinheit (110) zum Antrieb eines zur Werkstückbearbeitung vorgesehenen, austauschbaren Einsatzwerkzeugs (115) ausgebildet ist, wobei eine SDS-Werkzeugaufnahme (120) zur Aufnahme des austauschbaren Einsatzwerkzeugs (115) vorgesehen ist, wobei die SDS-Werkzeugaufnahme (120) mindestens einen Absaugkanal (212) zum Abtransport von bei der Werkstückbearbeitung anfallendem Staub aufweist **dadurch gekennzeichnet, dass** die SDS-Werkzeugaufnahme (120) ein Aufnahmegehäuse (122, 124) mit einem Verschlusselement (122) und einem Grundkörper (124) aufweist, wobei das Verschlusselement (122) dazu ausgebildet ist, den Grundkörper (124) zumindest im Betriebszustand der Handwerkzeugmaschine (100) zu verschließen, wobei der Absaugkanal (212, 214) in das Aufnahmegehäuse (122, 124) eingeformt und in dessen Verschlusselement (122) oder in dessen Grundkörper (124) und in dessen Verschlusselement (122) ausgebildet ist.

2. Handwerkzeugmaschine nach Anspruch 1, **dadurch gekennzeichnet, dass** die SDS-Werkzeugaufnahme (120) ein Aufnahmegehäuse (122, 124) aufweist, wobei der mindestens eine Absaugkanal (212) in das Aufnahmegehäuse (122, 124) eingeformt ist.

3. Handwerkzeugmaschine nach Anspruch 1 oder 2, **dadurch gekennzeichnet, dass** die SDS-Werkzeugaufnahme (120) einen mit einem Verschlusselement (122) verschließbaren Grundkörper (124) aufweist, der mit dem Werkzeuggehäuse (107) verbunden ist, an das Werkzeuggehäuse (107) angeformt ist oder einstückig mit dem Werkzeuggehäuse (107) ausgebildet ist.

4. Handwerkzeugmaschine nach Anspruch 3, **dadurch gekennzeichnet, dass** in dem Grundkörper (124) eine Spannvorrichtung (220) zum Einspannen des Einsatzwerkzeugs (115) angeordnet ist.

5. Handwerkzeugmaschine nach Anspruch 3 oder 4, **dadurch gekennzeichnet, dass** der mindestens eine Absaugkanal (212) zumindest bereichsweise im Grundkörper (124) und/oder im Verschlusselement (122) ausgebildet ist.

6. Handwerkzeugmaschine nach einem der Ansprüche 3 bis 5, **dadurch gekennzeichnet, dass** der Grundkörper (124) mindestens einen ersten rinnenförmigen Kanal (232) aufweist und das Verschlusselement (122) mit mindestens einem zweiten rinnenförmigen Kanal (222) versehen ist, wobei der erste rinnenförmige Kanal (232) und der zweite rinnenförmige Kanal (222) dazu ausgebildet sind, bei einem Verschließen des Grundkörpers (124) mit dem Verschlusselement (122) den mindestens einen Absaugkanal (212) auszubilden.

7. Handwerkzeugmaschine nach einem der Ansprüche 3 bis 6, **dadurch gekennzeichnet, dass** das Verschlusselement (122) ein Verriegelungselement (160) zur Verriegelung an dem Grundkörper (124) aufweist.

8. Handwerkzeugmaschine nach Anspruch 7, **dadurch gekennzeichnet, dass** das Verriegelungselement (160) zur Verrastung am Grundkörper (124) ausgebildet ist und zumindest ein Rastelement (262, 362) aufweist.

9. Handwerkzeugmaschine nach Anspruch 7, **dadurch gekennzeichnet, dass** das Verriegelungselement (160) zur Verschraubung am Grundkörper (124) ausgebildet ist, wobei am Grundkörper (124) zumindest ein Schraubgewinde (410) vorgesehen ist.

10. Handwerkzeugmaschine nach einem der Ansprüche 3 bis 9, **dadurch gekennzeichnet, dass** das Verschlusselement (122) schwenkbar am Grundkörper (124) angeordnet ist.

11. Handwerkzeugmaschine nach einem der vorhergehenden Ansprüche, **dadurch gekennzeichnet, dass** der mindestens eine Absaugkanal (212) rohrförmig ausgebildet ist.

12. Handwerkzeugmaschine nach einem der vorhergehenden Ansprüche, **dadurch gekennzeichnet, dass** der mindestens eine Absaugkanal (212) mit einem Absaugstutzen (130) zur Verbindung mit einer externen Absaugung verbunden ist.

13. Handwerkzeugmaschine nach einem der vorhergehenden Ansprüche, **dadurch gekennzeichnet, dass** das austauschbare Einsatzwerkzeug (115) nach Art eines zum Umlauf um eine zugeordnete Führungseinheit (117) ausgebildeten Schneidstrangs (116) ausgebildet ist.

14. Handwerkzeugmaschine nach einem der vorhergehenden Ansprüche, die nach Art einer Kettensäge ausgebildet ist.

15. SDS-Werkzeugaufnahme (120) zur Aufnahme eines zur Werkstückbearbeitung vorgesehenen, austauschbaren Einsatzwerkzeugs' (115), **gekennzeichnet dadurch, dass** die SDS-Werkzeugaufnahme (120) ein Aufnahmegehäuse (122, 124) mit einem Verschlusselement (122) und einem Grundkörper (124) aufweist, wobei das Verschlusselement (122) dazu ausgebildet ist, den Grundkörper (124) zumindest im Betriebszustand einer Handwerkzeugmaschine (100) zu verschließen, wobei der Absaugkanal (212, 214) in das Aufnahmegehäuse (122, 124) eingeformt und in dessen Verschlusselement (122) oder in dessen Grundkörper (124) und in dessen Verschlusselement (122) ausgebildet ist.

## Claims

1. Hand-held power tool (100) having a tool housing (107), in which there is realized at least one drive unit (110) for driving an exchangeable insert tool (115) provided for working on workpieces, wherein an SDS tool receiver (120), for receiving the exchangeable insert tool (115), is provided, wherein the SDS tool receiver (120) has at least one vacuuming-off channel (212) for removing dust produced during working on a workpiece, **characterized in that** the SDS tool receiver (120) has a receiver housing (122, 124) with a closure element (122) and a main body (124), wherein the closure element (122) is designed to close the main body (124) at least in the operating state of the hand-held power tool (100), wherein the vacuuming-off channel (212, 214) is formed into the receiver housing (122, 124) and is realized in its closure element (122) or in its main body (124) and in its closure element (122).

2. Hand-held power tool according to Claim 1, **characterized in that** the SDS tool receiver (120) has a receiver housing (122, 124), wherein the at least one vacuuming-off channel (212) is formed into the receiver housing (122, 124).

3. Hand-held power tool according to Claim 1 or 2, **characterized in that** the SDS tool receiver (120) has a main body (124), which can be closed with a closure element (122), and which is connected to the tool housing (107), formed onto the tool housing (107) or realized so as to be integral with the tool housing (107).

4. Hand-held power tool according to Claim 3, **characterized in that** a clamping device (220), for clamping-in the insert tool (115), is disposed in the main body (124).

5. Hand-held power tool according to Claim 3 or 4, **characterized in that** the at least one vacuuming-off channel (212) is realized, at least in regions, in the main body (124) and/or in the closure element (122).

6. Hand-held power tool according to any one of Claims 3 to 5, **characterized in that** the main body (124) has at least one first flute-type channel (232), and the closure element (122) is provided with at least one second flute-type channel (222), wherein the first flute-type channel (232) and the second flute-type channel (222) are realized so as to realize the at least one vacuuming-off channel (212) when the main body (124) is closed with the closure element (122).

7. Hand-held power tool according to any one of Claims 3 to 6, **characterized in that** the closure element (122) has a locking element (160) for locking to the main body (124).

8. Hand-held power tool according to Claim 7, **characterized in that** the locking element (160) is realized to latch on the main body (124), and has at least one latching element (262, 362).

9. Hand-held power tool according to Claim 7, **characterized in that** the locking element (160) is realized for screw connection to the main body (124), wherein at least one screw thread (410) is provided on the main body (124).

10. Hand-held power tool according to any one of Claims 3 to 9, **characterized in that** the closure element (122) is disposed in a pivotable manner on the main body (124).

11. Hand-held power tool according to any one of the preceding claims, **characterized in that** the at least one vacuuming-off channel (212) is tubular in form.

12. Hand-held power tool according to any one of the preceding claims, **characterized in that** the at least one vacuuming-off channel (212) is connected to a vacuuming-off connecting piece (130) for connection to an external vacuuming-off system.

13. Hand-held power tool according to any one of the preceding claims, **characterized in that** the exchangeable insert tool (115) is realized in the manner of a cutting strand (116) realized to revolve around an assigned guide unit (117).

14. Hand-held power tool according to any one of the preceding claims, which is realized in the manner of a chain saw.

15. SDS tool receiver (120) for receiving an exchangeable insert tool (115) provided for working on workpieces, **characterized in that** the SDS tool receiver (120) has a receiver housing (122, 124) with a closure element (122) and a main body (124), wherein the closure element (122) is designed to close the main body (124) at least in the operating state of a hand-held power tool (100), wherein the vacuuming-off channel (212, 214) is formed into the receiver housing (122, 124) and is realized in its closure element (122) or in its main body (124) and in its closure element (122).

## Revendications

1. Machine-outil portative (100) comprenant un boîtier d'outil (107) dans lequel est réalisée au moins une unité d'entraînement (110) pour l'entraînement d'un outil d'insertion (115) échangeable prévu pour l'usinage d'une pièce, dans laquelle un logement d'outil SDS (120) est prévu pour la réception de l'outil d'insertion (115) échangeable, dans laquelle le logement d'outil SDS (120) comprend au moins un canal d'aspiration (212) pour l'évacuation de la poussière produite lors de l'usinage d'une pièce, **caractérisée en ce que** le logement d'outil SDS (120) comprend un boîtier de réception (122, 124) doté d'un élément de fermeture (122) et d'un corps de base (124), l'élément de fermeture (122) étant conçu pour fermer le corps de base (124) au moins dans l'état de fonctionnement de la machine-outil portative (100), le canal d'aspiration (212, 214) étant formé dans le boîtier de réception (122, 124) et étant réalisé dans son élément de fermeture (122) ou dans son corps de base (124) et dans son élément de fermeture (122).

2. Machine-outil portative selon la revendication 1, **caractérisée en ce que** le logement d'outil SDS (120) comprend un boîtier de réception (122, 124), l'au moins un canal d'aspiration (212) étant formé dans le boîtier de réception (122, 124).

3. Machine-outil portative selon la revendication 1 ou 2, **caractérisée en ce que** le logement d'outil SDS (120) comprend un corps de base (124) pouvant être fermé à l'aide d'un élément de fermeture (122), lequel corps de base est relié au boîtier d'outil (107), est formé sur le boîtier d'outil (107) ou est réalisé d'un seul tenant avec le boîtier d'outil (107).

4. Machine-outil portative selon la revendication 3, **caractérisée en ce qu'**un dispositif de serrage (220) servant au serrage de l'outil d'insertion (115) est disposé dans le corps de base (124).

5. Machine-outil portative selon la revendication 3 ou 4, **caractérisée en ce que** l'au moins un canal d'aspiration (212) est réalisé au moins dans certaines zones dans le corps de base (124) et/ou dans l'élément de fermeture (122).

6. Machine-outil portative selon l'une des revendications 3 à 5, **caractérisée en ce que** le corps de base (124) comprend au moins un premier canal (232) en forme de goulotte et l'élément de fermeture (122) est doté d'au moins un deuxième canal (222) en forme de goulotte, le premier canal (232) en forme de goulotte et le deuxième canal (222) en forme de goulotte étant réalisés pour former l'au moins un canal d'aspiration (212) lors d'une fermeture du corps de base (124) à l'aide de l'élément de fermeture (122).

7. Machine-outil portative selon l'une des revendications 3 à 6, **caractérisée en ce que** l'élément de fermeture (122) comprend un élément de verrouillage (160) servant au verrouillage sur le corps de base (124).

8. Machine-outil portative selon la revendication 7, **caractérisée en ce que** l'élément de verrouillage (160) est réalisé pour s'encliqueter sur le corps de base (124) et comprend au moins un élément d'encliquetage (262, 362).

9. Machine-outil portative selon la revendication 7, **caractérisée en ce que** l'élément de verrouillage (160) est réalisé pour être vissé sur le corps de base (124), au moins un filetage de vis (410) étant prévu sur le corps de base (124).

10. Machine-outil portative selon l'une des revendications 3 à 9, **caractérisée en ce que** l'élément de fermeture (122) est disposé de manière pivotante sur le corps de base (124).

11. Machine-outil portative selon l'une des revendications précédentes, **caractérisée en ce que** l'au moins un canal d'aspiration (212) est réalisé de manière tubulaire.

12. Machine-outil portative selon l'une des revendications précédentes, **caractérisée en ce que** l'au moins un canal d'aspiration (212) est relié à une tubulure d'aspiration (130) pour la liaison à une aspiration externe.

13. Machine-outil portative selon l'une des revendications précédentes, **caractérisée en ce que** l'outil d'insertion (115) échangeable est réalisé à la manière d'un brin de coupe (116) réalisé pour tourner autour d'une unité de guidage (117) associée.

14. Machine-outil portative selon l'une des revendications précédentes, qui est réalisée à la manière d'une scie à chaîne.

15. Logement d'outil SDS (120) pour la réception d'un outil d'insertion (115) échangeable prévu pour l'usinage d'une pièce, **caractérisé en ce que** le logement d'outil SDS (120) comprend un boîtier de réception (122, 124) doté d'un élément de fermeture (122) et d'un corps de base (124), l'élément de fermeture (122) étant conçu pour fermer le corps de base (124) au moins dans l'état de fonctionnement d'une machine-outil portative (100), le canal d'aspiration (212, 214) étant formé dans le boîtier de réception (122, 124) et étant réalisé dans son élément de fermeture (122) ou dans son corps de base (124) et dans son élément de fermeture (122).
